# EUROPÄISCHE PATENTSCHRIFT

(11) **EP 2 350 167 B1**
(45) Veröffentlichungstag und Bekanntmachung des Hinweises auf die Patenterteilung: **16.01.2013**
(21) Anmeldenummer: 09752366.6
(22) Anmeldetag: 16.11.2009
(51) Int. Cl.: C08G 77/445, C08G 77/448, C08G 77/458, C08G 77/46, C08L 83/08, C08L 83/12, B01D 19/04

(54) **ENTSCHÄUMERZUSAMMENSETZUNGEN**
ANTIFOAMING COMPOSITIONS
COMPOSITIONS ANTIMOUSSE

(30) Priorität: 20.11.2008 DE 102008043944
(43) Veröffentlichungstag der Anmeldung: 03.08.2011
(73) Patentinhaber: Wacker Chemie AG, 81737 München (DE)
(72) Erfinder: RAUTSCHEK, Holger, 01612 Nünchritz (DE); BREHM, Elisabeth, 84489 Burghausen (DE); HERZIG, Christian, 83329 Waging (DE)
(74) Vertreter: Budczinski, Angelika
(86) Internationale Anmeldenummer: PCT/EP2009/065236
(87) Internationale Veröffentlichungsnummer: WO 2010/057855

(56) Entgegenhaltungen:
- EP-A2- 1 424 117
- DE-A1-102005 025 450

## Beschreibung

Die Erfindung betrifft Zusammensetzungen enthaltend spezielle Polysiloxancopolymere, Verfahren zu deren Herstellung sowie deren Verwendung als Entschäumer, insbesondere zum Entschäumen wässriger Tensidformulierungen.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensivem Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt. Entschäumer auf Basis von Siloxanen werden beispielsweise nach DE-AS 15 19 987 durch Erhitzen von hydrophiler Kieselsäure in Polydimethylsiloxanen hergestellt.

Entschäumer auf der Basis von Polydimethylsiloxanen haben den Nachteil, dass Polydimethylsiloxane mit den meisten Tensidsystemen, wie z.B. Netzmitteln oder Flüssigwaschmitteln, schlecht verträglich sind und zur Abscheidung neigen, was sehr unerwünscht ist.

Diese Antischaummittel können mit Polyethersiloxanen kombiniert werden, wie z.B. in EP-A 341952, DE 102004052421 und DE 102005025450 beschrieben. Die Polyethersiloxane dienen der Verbesserung der Wirksamkeit der Entschäumer auf der Basis von Siloxanen, die als unverzichtbar angesehen werden. Diese Entschäumerformulierungen sind jedoch ebenfalls unverträglich mit wässrigen Tensidsystemen und deshalb nicht für die Anwendung in lagerstabilen wässrigen Formulierungen, wie z.B. Flüssigwaschmitteln und Netzmitteln, geeignet.

Gegenstand der Erfindung sind Zusammensetzungen enthaltend
(A) Polysiloxancopolymere herstellbar indem
   in einem 1. Schritt
   Organopolysiloxane (1), die pro Molekül mindestens ein Si-gebundenes Wasserstoffatom, vorzugsweise mindestens zwei Si-gebundene Wasserstoffatome, aufweisen, mit weitgehend linearen oligomeren oder polymeren Verbindungen (2) der allgemeinen Formel

   R¹ (A-CₙH₂ₙ)ₘ-A¹-H (I),

   wobei R¹ einen einwertigen, gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest,
   A einen zweiwertigen, polaren organischen Rest ausgewählt aus der Gruppe von -O-, -C (O) -O-, -O-C(O)-, -O-C(O)-O-, -C(O)-NH-, -NH-C(O)-, Urethanrest und Harnstoffrest, vorzugsweise ein Sauerstoffatom -O-, bedeutet,
   A¹ einen zweiwertigen, polaren organischen Rest ausgewählt aus der Gruppe von -O-, -NH- und -NR'-, wobei R' ein einwertiger Kohlenwasserstoffrest mit 1 bis 18 Kohlenstoffatomen ist, vorzugsweise ein Sauerstoffatom -O-, bedeutet,
   n eine ganze Zahl von 1 bis 20, vorzugsweise 1 bis 4, besonders bevorzugt 2 oder 3, ist und
   m eine ganze Zahl, vorzugsweise 5 bis 50, ist, umgesetzt werden,
   mit der Maßgabe, dass die m Einheiten (A-CₙH₂ₙ) gleich oder verschieden sein können,
   und in einem 2. Schritt
   die so erhaltenen H-A¹-Gruppen aufweisenden Zwischenprodukte (4) mit organischen Verbindungen (5), die pro Molekül mindestens zwei Isocyanatgruppen aufweisen, sowie gegebenenfalls weiteren Verbindungen (7) umgesetzt werden,
(B) Organopolysiloxanharze aus Einheiten der Formel

   R⁸_{g}(R⁹O)ₕSiO(_{4-g-h})/2 (VI),

   worin
   R⁸ gleich oder verschieden sein kann und Wasserstoffatom oder einen einwertigen, gegebenenfalls substituierten, SiC-gebundenen Kohlenwasserstoffrest bedeutet,
   R⁹ gleich oder verschieden sein kann und ein Wasserstoffatom oder einen einwertigen, gegebenenfalls substituierten Kohlenwasserstoffrest bedeutet,
   g 0, 1, 2 oder 3 ist und
   h 0, 1, 2 oder 3 ist,
   mit der Maßgabe, dass die Summe g+h≤3 ist und in weniger als 50 % aller Einheiten der Formel (VI) im Organopolysiloxanharz die Summe g+h gleich 2 ist,
   gegebenenfalls
(C) polyethermodifizierte Siloxane, die von (A) verschieden sind,
   gegebenenfalls
(D) organische Verbindungen,
   gegebenenfalls
(E) Wasser und
   gegebenenfalls
(F) Additive,
   mit der Maßgabe, dass diese Zusammensetzungen keine Polyorganosiloxane enthalten, bei denen mehr als 90% der Einheiten difunktionelle Einheiten der Formel SiR" ₂O_{2/2} sind mit R" gleich Kohlenwasserstoffrest.

Die erfindungsgemäßen Zusammensetzungen sind frei von Polyorganosiloxanen, bei denen mehr als 90%, bevorzugt mehr als 50 %, der Einheiten difunktionelle Einheiten der Formel SiR"₂O_{2/2} sind mit R" gleich Kohlenwasserstoffrest, wie z.B. im Wesentlichen lineare Polydimethylsiloxane oder Polymethylphenylsiloxane.

Die erfindungsgemäßen Zusammensetzungen sind bevorzugt frei von hochdisperser Kieselsäure, besonders bevorzugt frei von anorganischen Füllstoffen.

Bevorzugt handelt es sich bei den Zusammensetzungen um solche bestehend aus
(A) Polysiloxancopolymeren herstellbar indem
   in einem 1. Schritt
   Organopolysiloxane (1), die pro Molekül mindestens ein Si-gebundenes Wasserstoffatom, vorzugsweise mindestens zwei Si-gebundene Wasserstoffatome, aufweisen, mit weitgehend linearen oligomeren oder polymeren Verbindungen (2) der allgemeinen Formel

   R¹-(A-CₙH₂ₙ)ₘ-A¹-H (I),

   wobei R¹ einen einwertigen, gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest,
   A einen zweiwertigen, polaren organischen Rest ausgewählt aus der Gruppe von -O-, -C(O)-O-, -O-C(O)-, -O-C(O)-O-, -C(O)-NH-, -NH-C(O)-, Urethanrest und Harnstoffrest, vorzugsweise ein Sauerstoffatom -O-, bedeutet,
   A¹ einen zweiwertigen, polaren organischen Rest ausgewählt aus der Gruppe von -O-, -NH- und -NR'-, wobei R' ein einwertiger Kohlenwasserstoffrest mit 1 bis 18 Kohlenstoffatomen ist, vorzugsweise ein Sauerstoffatom -O-, bedeutet,
   n eine ganze Zahl von 1 bis 20, vorzugsweise 1 bis 4, besonders bevorzugt 2 oder 3, ist und
   m eine ganze Zahl, vorzugsweise 5 bis 50, ist,
   umgesetzt werden,
   mit der Maßgabe, dass die m Einheiten (A-CₙH₂ₙ) gleich oder verschieden sein können,
   und in einem 2. Schritt
   die so erhaltenen H-A¹-Gruppen aufweisenden Zwischenprodukte (4) mit organischen Verbindungen (5), die pro Molekül mindestens zwei Isocyanatgruppen aufweisen, sowie gegebenenfalls weiteren Verbindungen (7) umgesetzt werden,
(B) Organopolysiloxanharzen aus Einheiten der Formel

   R⁸_{g} (R⁹O)ₕSiO_{(4-g-h})/2 (VI),

   worin
   R⁸ gleich oder verschieden sein kann und Wasserstoffatom oder einen einwertigen, gegebenenfalls substituierten, SiC-gebundenen Kohlenwasserstoffrest bedeutet,
   R⁹ gleich oder verschieden sein kann und ein Wasserstoffatom oder einen einwertigen, gegebenenfalls substituierten Kohlenwasserstoffrest bedeutet,
   g 0, 1, 2 oder 3 ist und
   h 0, 1, 2 oder 3 ist,
   mit der Maßgabe, dass die Summe g+h≤3 ist und in weniger als 50 % aller Einheiten der Formel (VI) im Organopolysiloxanharz die Summe g+h gleich 2 ist,
   gegebenenfalls
(C) polyethermodifizierten Siloxanen, die von (A) verschieden sind,
   gegebenenfalls
(D) organischen Verbindungen,
   gegebenenfalls
(E) Wasser und
   gegebenenfalls
(F) Additiven.

Die in den erfindungsgemäßen Zusammensetzungen eingesetzten Polysiloxancopolymere (A) besitzen eine Viskosität von vorzugsweise 1 000 bis 100 000 000 mm²/s, besonders bevorzugt 1 000 bis 10 000 000 mm²/s, jeweils bei 25°C.

Überraschenderweise wurde gefunden, dass die erfindungsgemäßen Zusammensetzungen auf der Basis der Polysiloxancopolymeren (A) nicht nur sehr gut verträglich sind mit wässrigen Tensidformulierungen, sondern auch ohne herkömmliche Entschäumer auf der Basis von im Wesentlichen linearen Polyorganosiloxanen, insbesondere Polydimethylsiloxanen, und ohne Kieselsäure eine hervorragende Wirksamkeit haben.

Die Zusammensetzungen enthalten vorzugsweise 10 bis 98 Gew.-%, besonders bevorzugt 30 bis 90 Gew.-%, Polysiloxancopolymere (A).

Die erfindungsgemäß eingesetzten Polysiloxancopolymere (A) werden wie folgt erhalten:
Im ersten Verfahrensschritt werden als Organopolysiloxane (1) vorzugsweise lineare, cyclische oder verzweigte Organopolysiloxane aus Einheiten der allgemeinen Formel

   RₑH_{f}SiO_{(4-e-f)/2} (II)

   verwendet, wobei
   R gleich oder verschieden sein kann und einen einwertigen, gegebenenfalls substituierten Kohlenwasserstoffrest mit 1 bis 18 Kohlenstoffatomen je Rest bedeutet,
   e 0, 1, 2 oder 3 ist und
   f 0, 1 oder 2 ist,
   mit der Maßgabe, dass die Summe e+f 0, 1, 2 oder 3 ist und pro Molekül mindestens ein Si-gebundenes Wasserstoffatom, bevorzugt mindestens 2 Si-gebundene Wasserstoffatome, vorliegen.

Bevorzugt werden als Organopolysiloxane (1) solche der allgemeinen Formel

H_{g}R_{3-g}SiO(SiR₂O)ₒ(SiRHO)ₚSiR_{3-g}H_{g} (III)

verwendet, wobei
R die oben dafür angegebene Bedeutung hat,
g 0, 1 oder 2 ist,
o 0 oder eine ganze Zahl von 1 bis 1500 ist und
p 0 oder eine ganze Zahl von 1 bis 200 ist,
mit der Maßgabe, dass pro Molekül mindestens ein Si-gebundenes Wasserstoffatom, bevorzugt mindestens zwei Si-gebundene Wasserstoffatome, vorliegen.

Im Rahmen dieser Erfindung soll Formel (III) so verstanden werden, dass o Einheiten -(SiR₂O)- und p Einheiten -(SiRHO)- in beliebiger Weise im Organopolysiloxanmolekül verteilt sein können.

Besonders bevorzugt ist in Formel (III) g gleich 0, o gleich 20 bis 100 und p gleich 3 bis 10, und es werden als Organopolysiloxane (1) Copolymerisate aus Hydrogenalkylsiloxy- und Dialkylsiloxyeinheiten, insbesondere Copolymerisate aus Hydrogenmethylsiloxy- und Dimethylsiloxyeinheiten, eingesetzt.

Die Organopolysiloxane (1) besitzen vorzugsweise eine durchschnittliche Viskosität von 10 bis 1 000 mm²/s, besonders bevorzugt 50 bis 1000 mm²/s, insbesondere 60 bis 600 mm²/s, jeweils bei 25°C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Beispiele für Reste R gelten im vollen Umfang für Reste R'.

Beispiele für Reste R¹ sind Alkenylreste, wie der Vinyl-, 5-Hexenyl-, Cyclohexenyl-, 1-Propenyl-, Allyl-, 3-Butenyl- und 4-Pentenylrest, und Alkinylreste, wie der Ethinyl-, Propargyl- und 1-Propinylrest.

Bevorzugt handelt es sich bei dem Rest R¹ um Alkenylreste, besonders bevorzugt ω-Alkenylreste, insbesondere um den Allylrest.

Bevorzugt als oligomere oder polymere Verbindungen (2) sind Polyether der allgemeinen Formel

H₂C=CH-R²-(OCₙH₂ₙ)ₘ-OH (IV),

wobei R² ein zweiwertiger Kohlenwasserstoffrest mit 1 bis 10 Kohlenstoffatomen, bevorzugt ein Rest der Formel -CH₂-, -CH (CH₃) - oder -C(CH₃)₂-, bedeutet und
n und m eine der oben dafür angegebenen Bedeutungen haben.

Besonders bevorzugte Beispiele für Polyether (2) sind solche der allgemeinen Formel

H₂C=CH-R²-(OCH₂CH₂)ₐ[OCH₂CH(CH₃)]_{b}-OH (IV'),

wobei R² die oben dafür angegebene Bedeutung hat sowie a und b jeweils unabhängig voneinander 0 oder eine ganze Zahl bedeuten, wobei die Summe a+b 1 bis 200, vorzugsweise 5 bis 50, beträgt.

Weitere Beispiele für oligomere oder polymere Verbindungen (2) sind ungesättigte Polyester, wie H₂C=CH-R²-[O(O)CCₙH₂ₙ]ₘ-OH, ungesättigte Polycarbonate, wie H₂C=CH-R²-[OC(O)OCₙH₂ₙ]ₘ-OH, und ungesättigte Polyamide, wie H₂C=CH-R²-[NHC(O)CₙH₂ₙ]ₘNH₂, wobei R², n und m die eine der oben angegebenen Bedeutungen haben.

Der Wassergehalt der zur Herstellung der Polysiloxancopolymere (A) eingesetzten Verbindungen (1) und (2) ist bevorzugt niedriger als 2000 Gew.-ppm, besonders bevorzugt niedriger als 1500 Gew.-ppm, insbesondere niedriger als 1000 Gew.-ppm, jeweils bezogen auf das Gesamtgewicht von Verbindungen (1) und (2). Der Wassergehalt bezieht sich dabei auf Raumtemperatur (20°C) und den Druck der umgebenden Atmosphäre (1020 hPa).

Die Verbindungen (2) werden im ersten Verfahrensschritt vorzugsweise in Mengen von 1,0 bis 4,0 Mol, besonders bevorzugt 1,3 bis 2,5 Mol Rest R¹, der vorzugsweise ein Rest mit aliphatischer C-C-Mehrfachbindung ist, besonders bevorzugt ein ω-Alkenylrest ist, je Grammatom Si-gebundenem Wasserstoff im Organopolysiloxan (1) eingesetzt.

Im ersten Verfahrensschritt wird vorzugsweise die Anlagerung von Si-gebundenem Wasserstoff an aliphatische Mehrfachbindung fördernde Katalysatoren (3) eingesetzt. Als Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern wie Siliciumdioxid, Aluminiumoxid oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinyl-siloxankomplexe, wie Platin-1,3-Divinyl-1,1,3,3-tetra-methyl-disiloxankomplexe mit oder ohne Gehalt an nachweisbarem anorganisch gebundenen Halogen, Bis-(γ-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, γ-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Falls im ersten Verfahrensschritt Katalysator (3) eingesetzt wird, handelt es sich um Mengen von bevorzugt 1 bis 50 Gew.-ppm (Gewichtsteilen je Million Gewichtsteilen), besonders bevorzugt 2 bis 20 Gew.-ppm, jeweils berechnet als elementares Platin und bezogen auf das Gesamtgewicht der Organopolysiloxane (1) und Verbindungen (2).

Der erste Verfahrensschritt wird vorzugsweise beim Druck der umgebenden Atmosphäre, also etwa 900 bis 1100 hPa (abs.), durchgeführt. Ferner wird der erste Verfahrensschritt vorzugsweise bei einer Temperatur von 60 bis 140°C, besonders bevorzugt 80 bis 120°C, durchgeführt.

Im zweiten Verfahrensschritt werden als organische Verbindungen (5), die pro Molekül mindestens zwei Isocyanatgruppen aufweisen, bevorzugt solche der allgemeinen Formel

O=C=N-R³-N=C=O (V)

eingesetzt, wobei R³ einen zweiwertigen Kohlenwasserstoffrest mit 4 bis 40 Kohlenstoffatomen je Rest bedeutet.

Beispiele für organische Verbindungen (5) sind Hexamethylen-1,6-diisocyanat, Isophorondiisocyanat, Tolylen-2,4-diisocyanat, Tolylen-2,6-diisocyanat, Phenylen-1,3-diisocyanat, 4,4'-Methylen-bis(cyclohexylisocyanat), 4,4'-Methylen-bis(phenylisocyanat) und Dimethylphenyldiisocyanat.

Organische Verbindungen (5) werden im zweiten Verfahrensschritt zur Herstellung der erfindungsgemäß eingesetzten Komponente (A) vorzugsweise in Mengen von 0,1 bis 0,9 Mol, besonders bevorzugt 0,2 bis 0,7 Mol, Isocyanatgruppen je Mol H-A¹-Gruppe im Zwischenprodukt (4) eingesetzt.

Für die Umsetzung im zweiten Schritt werden vorzugsweise Kondensationskatalysatoren (6), wie Di-n-butylzinndilaurat, Zinn-II-octoat, Dibutylzinndiacetat, Kaliumoctoat, Wismutcarboxylate, Zinkoctoat, Zirkon-carboxylate oder tert. Amine, wie Dimethylcyclohexylamin, Dimethylaminopropyldipropanolamin, Pentamethyldipropylentriamin, N-Methylimidazol oder N-Ethyl-morpholin, eingesetzt.

Ein bevorzugtes Polysiloxancopolymer (A) wird erhalten, indem im ersten Verfahrensschritt ein methylterminiertes hydrogenfunktionelles Polysiloxan (1), das seitenständig Si-gebundene Wasserstoffatome aufweist, mit einem Überschuss an Polyether (2) der Formel (IV) umgesetzt wird und im zweiten Verfahrensschritt das Zwischenprodukt (4), ein Siliconpolyether mit Kammstruktur, mit einem Diisocyanat (5) der Formel (V) umgesetzt wird, wobei Urethan-Gruppen in das Polysiloxancopolymer eingeführt werden. Auch freier Polyether aus dem 1. Schritt wird dabei durch Urethanbildung gebunden.

Die Urethangruppen in den erfindungsgemäß eingesetzten hydrophilen Polysiloxancopolymeren (A) können als Donoren und Akzeptoren bei der Ausbildung von Wasserstoffbrücken wirken.

Im zweiten Schritt zur Herstellung der erfindungsgemäß eingesetzten Siloxancopolymeren (A) können zusätzlich zu den organischen Verbindungen (5) noch weitere Verbindungen (7), die gegenüber Isocyanatgruppen reaktiv sind, eingesetzt werden. Bevorzugte Beispiele für weitere Verbindungen (7) sind solche ausgewählt aus der Gruppe der Formeln

R⁴-(A-CnH₂ₙ)ₘ-A¹-H (VII),

HO-R⁵-NR⁴-R⁵-OH (VIII),

HO-R⁵-NR⁴₂ (IX),

HO-R⁶(NR⁴₂)₂ (X),

HO-R⁷(NR⁴₂)₃ (XI),

(HO)₂R⁶-NR⁴₂ (XII)

und

HNR⁴₂ (XIII),

wobei R⁴ ein Wasserstoffatom oder einen Rest R, der ein oder mehrere Stickstoffatome enthalten kann, bedeutet,
R⁵ gleich oder verschieden sein kann und einen zweiwertigen Kohlenwasserstoffrest mit 1 bis 10 Kohlenstoffatomen je Rest bedeutet,
R⁶ einen dreiwertigen organischen Rest mit 1 bis 100 Kohlenstoffatomen je Rest, vorzugsweise einen dreiwertigen Kohlenwasserstoffrest mit 1 bis 100 Kohlenstoffatomen, der ein oder mehrere Sauerstoffatome enthält, bedeutet,
R⁷ einen vierwertigen organischen Rest mit 1 bis 100 Kohlenstoffatomen je Rest, vorzugsweise einen vierwertigen Kohlenwasserstoffrest mit 1 bis 100 Kohlenstoffatomen, der ein oder mehrere Sauerstoffatome enthält, bedeutet, und
A¹, n und m eine der oben dafür angegebenen Bedeutungen haben.

Beispiele für Verbindungen der Formel (VII) sind Methylpolyethylenoxid, Butylpolyethylenoxid, Methylpolyethylenoxid/polypropylenoxid und Methylpolypropylenoxid.

Beispiele für Verbindungen der Formel (VIII) sind N-Methyldiethanolamin, N-Methyldipropanolamin, Dimethylaminopropyldipropanolamin, N-Dodecyldiethanolamin und N-Stearyldipropanolamin.

Beispiele für Verbindungen der Formel (IX) sind N,N-Dimethylethanolamin, N,N-Diethylpropanolamin, N,N-Dimethylaminopropylmethylethanolamin und Dimethyl-2-(2-aminoethoxy)ethanol.

Beispiele für Verbindungen der Formel (X) sind 1,5-Bis(dimethylamino)-pentan-3-ol, 1,5-Bis(methylamino)-pentan-3-ol, 1,7-Bis(dimethylamino)-heptan-4-ol und N,N-Bis-(3-dimethylaminopropyl)-N-isopropanolamin.

Beispiele für Verbindungen der Formel (XI) sind 2,4,6-Tris(dimethylaminomethyl)-phenol, 1,1,1-Tris(dimethylaminomethyl)-methanol und 2,4,6- Tris(dimethylaminomethyl)-cyclohexanol.

Beispiele für Verbindungen der Formel (XII) sind N,N-Bis(dimethylaminopropyl)-3-aminopropan-1,2-diol, N,N-Bis(dimethylaminopropyl)-2-aminopropan-1,3-diol, N,N-Bis(3-dimethylaminopropyl)-carbaminosäuremonoglycerid.

Beispiele für Verbindungen der Formel (XIII) sind Dibutylamin, Octylamin, Benzylamin, 3-(Cyclohexylamino)-propylamin, 2-(Diethylamino)-ethylamin, Dipropylentriamin, Isophorondiamin, Dimethylaminopropylmethylamin, Aminopropylmorpholin, N,N-Bis(dimethylaminopropyl)amin und Dimethylaminopropylamin.

Verbindungen der Formel (VIII) bis (XIII) bieten die Möglichkeit, in dem Polysiloxancopolymer (A) protonierbaren Stickstoff einzubauen.

Falls zur Herstellung der erfindungsgemäß eingesetzten Komponente (A) Verbindungen (7) eingesetzt werden, handelt es sich bevorzugt um Verbindungen der Formel (VII).

Zur Herstellung der erfindungsgemäß eingesetzten Komponente (A) werden bevorzugt Verbindungen (7) eingesetzt.

Verbindungen der Formel (VII) werden im zweiten Verfahrensschritt in Mengen von vorzugsweise 0 bis 2 Mol, besonders bevorzugt 0 bis 1 Mol, H-A¹-Gruppe je Mol H-A¹-Gruppe in Verbindung (2) eingesetzt.

Verbindungen der Formel (VIII) werden im zweiten Verfahrensschritt in Mengen von vorzugsweise 0 bis 2 Mol, besonders bevorzugt 0 bis 1 Mol, HO-Gruppe je Mol H-A¹-Gruppe in Verbindung (2) eingesetzt.

Verbindungen der Formel (IX) werden im zweiten Verfahrensschritt in Mengen von vorzugsweise 0 bis 2 Mol, besonders bevorzugt 0 bis 1 Mol, HO-Gruppe je Mol N-A¹-Gruppe in Verbindung (2) eingesetzt.

Verbindungen der Formel (X) werden im zweiten Verfahrensschritt in Mengen von vorzugsweise 0 bis 2 Mol, besonders bevorzugt 0 bis 1 Mol, HO-Gruppe je Mol H-A¹-Gruppe in Verbindung (2) eingesetzt.

Verbindungen der Formel (XI) werden im zweiten Verfahrensschritt in Mengen von vorzugsweise 0 bis 2 Mol, besonders bevorzugt 0 bis 1 Mol, HO-Gruppe je Mol H-A¹-Gruppe in Verbindung (2) eingesetzt.

Verbindungen der Formel (XII) werden im zweiten Verfahrensschritt in Mengen von vorzugsweise 0 bis 2 Mol, besonders bevorzugt 0 bis 1 Mol, HO-Gruppe je Mol H-A¹-Gruppe in Verbindung (2) eingesetzt.

Verbindungen der Formel (XIII) werden im zweiten Verfahrensschritt in Mengen von vorzugsweise 0 bis 2 Mol, besonders bevorzugt 0 bis 1 Mol, HN-Gruppe je Mol H-A¹-Gruppe in Verbindung (2) eingesetzt.

Auch bei der Verwendung von Verbindungen (7) wird Polyisocyanat (5) vorzugsweise im Unterschuss eingesetzt, um ein sicheres Abreagieren der als gesundheitsgefährdend betrachteten Isocyanatgruppen zu gewährleisten. Organische Verbindungen (5) werden daher im zweiten Verfahrensschritt vorzugsweise in Mengen von 0,1 bis 0,9 Mol, besonders bevorzugt 0,2 bis 0,7 Mol, Isocyanatgruppe je Mol der Summe mit Isocyanatgruppen reagierender Funktionen aus der Summe von Zwischenprodukt (4) und Verbindungen (7) eingesetzt.

Der zweite Verfahrensschritt wird vorzugsweise beim Druck der umgebenden Atmosphäre, also etwa zwischen 900 und 1100 hPa (abs.), durchgeführt. Ferner wird der zweite Verfahrensschritt vorzugsweise bei einer Temperatur von 40 bis 160°C, besonders bevorzugt 80 bis 140°C, durchgeführt.

Bei der Herstellung der erfindungsgemäß eingesetzten Polysiloxancopolymere (A) können zur Erniedrigung der teilweise sehr hohen Produktviskositäten gegebenenfalls niederviskose Stoffe (D), wie Alkohole oder Ether, insbesondere solche mit einem Siedepunkt größer als 100°C, bei dem Druck der umgebenden Atmosphäre, also bei 900 bis 1100 hPa, zugesetzt werden. Beispiele hierfür sind Ethanol, Isopropanol und n-Butanol, sowie vorzugsweise 2-Butoxyethanol, Diethylenglycolmonobutylether, Triethylenglycolmonohexylether, Methylether von Dipropylenglycol, Tetraethylenglycolmonohexylether, Hexaethylenglycolmonooctylether, Tetrahydrofuran, Diethylenglycoldiethylether sowie Dimethoxyethan, wobei Tetraethylenglycolmonohexylether besonders bevorzugt ist. Auch der Zusatz von polyethermodifizierten Siloxanen (C), die im Allgemeinen durch Hydrosilylierung von ungesättigten Polyethern mit Hydrogensiloxanen erhalten werden können, ist zur Reduzierung der Viskosität brauchbar. Bevorzugte Zusatzmengen sind im Fall sehr viskoser Produkte bis zu 50 Gew.-%, besonders bevorzugt bis zu 30 Gew.-%, bezogen auf die erfindungsgemäß hergestellten Polysiloxancopolymere (A). Derartige Zusätze haben außerdem den Vorteil, dass die daraus entstehenden Produkte in Wasser leichter dispergierbar sind als die reinen Polysiloxancopolymere.

Bei der erfindungsgemäß eingesetzten Komponente (B) handelt es sich bevorzugt um Siliconharze aus Einheiten der Formel (VI), bei denen in 0 bis 30%, bevorzugt in 0 bis 5%, der Einheiten im Harz die Summe g+h gleich 2 ist.

Bevorzugt handelt es sich bei den Resten R⁸ um Alkylreste mit 1 bis 4 Kohlenstoffatomen oder den Phenylrest, insbesondere um den Methylrest.

Bevorzugt handelt es sich bei den Resten R⁹ um Alkylreste mit 1 bis 4 Kohlenstoffatomen, besonders bevorzugt um Methyl- oder Ethylreste, insbesondere um Ethylreste.

Besonders bevorzugt handelt es sich bei Komponente (B) um Organopolysiloxanharze, die im Wesentlichen aus R⁸₃SiO_{1/2} (M)- und SiO_{4/12}(Q)-Einheiten bestehen mit R⁸ gleich der obengenannten Bedeutung; diese Harze werden auch als MQ-Harze bezeichnet. Das molare Verhältnis von M- zu Q-Einheiten liegt vorzugsweise im Bereich von 0,5 bis 2,0, besonders bevorzugt im Bereich von 0,6 bis 1,0. Diese Siliconharze können außerdem bis zu 10 Gew.-% freie Hydroxy- oder Alkoxygruppen enthalten. R⁸ ist dabei vorzugsweise Methylrest.

Vorzugsweise haben die Organopolysiloxanharze (B) bei 25°C eine Viskosität größer 1000 mm²/s oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Bevorzugt sind die erfindungsgemäß eingesetzten Organopolysiloxanharze (B) in Benzol bei einer Temperatur von 25°C und einem Druck von 101,325 kPa zu mindestens 100 g/l löslich.

Komponente (B) sind handelsübliche Produkte bzw. können nach in der Siliciumchemie gängigen Verfahren hergestellt werden.

Siloxanharze (B) werden in den erfindungsgemäßen Zusammensetzungen vorzugsweise in Mengen von 0,1 bis 20 Gew.-%, besonders bevorzugt 1 bis 10 Gew.-%, jeweils bezogen auf das Gesamtgewicht der Zusammensetzung, eingesetzt.

Die erfindungsgemäßen Zusammensetzungen können zusätzlich von (A) verschiedene Polyether-Polysiloxan-Copolymere (C) enthalten.

Beispiele für gegebenenfalls eingesetzte Komponente (C) sind die in DE-B2 22 22 998, Spalte 3 und 4, Zeilen 38-43, EP-A 1 424 117, Abschnitte [0072] und [0073], US-B 6,521,084, Spalte 4 Zeilen 35-44, US-B 6,187,891, Spalten 9/10, Tabelle 1 und EP-B 1 076 073, Seite 3, beschriebenen Verbindungen, die zum Offenbarungsgehalt der vorliegenden Erfindung zu zählen sind. Bei der Herstellung der erfindungsgemäßen Formulierungen können die Polyether-Polysiloxan-Copolymere (C) mit den erfindungsgemäß eingesetzten Polysiloxancopolymeren (A) abgemischt werden.

Die Polyether-Polysiloxan-Copolymere (C) können in den erfindungsgemäßen Zusammensetzungen vorzugsweise in Mengen von 0 bis 60 Gew.-%, besonders bevorzugt 0 bis 40 Gew.-%, jeweils bezogen auf das Gesamtgewicht der Zusammensetzung, eingesetzt werden. Die erfindungsgemäßen Zusammensetzungen enthalten in einer bevorzugten Variante 20 bis 40 Gew.-% Komponente (C).

Außer den Komponenten (A), (B) und gegebenenfalls (C) können die erfindungsgemäßen Zusammensetzungen alle weiteren Stoffe enthalten, wie sie auch bisher in Entschäumerformulierungen verwendet worden sind, wie z.B. organische Verbindungen (D).

Die gegebenenfalls eingesetzten organischen Verbindungen (D) sind bevorzugt frei von Siliziumatomen.

Bei der gegebenenfalls eingesetzten Komponente (D) handelt es sich besonders bevorzugt um organische Verbindungen mit einem Siedepunkt größer als 100°C, bei dem Druck der umgebenden Atmosphäre, also bei 900 bis 1100 hPa, insbesondere um Verbindungen, die nicht unzersetzt destilliert werden können, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, Fettsäureestern, wie z.B. Octylstearat, Dodecylpalmitat, Fettalkoholen, Ethern niedermolekularer Alkohole, Phthalaten, Glycole, Polyethylenglycole, Polypropylenglycole, Polyethylenglycol-polypropylenglycol-copolymere, Polyethylenglycol und/oder Polypropylenglycolether von linearen oder verzweigten Alkoholen mit 3-30 Kohlenstoffatomen, Polyethylenglycol und/oder Polypropylenglycolester von Carbonsäuren mit 3-30 Kohlenstoffatomen, Estern der Phosphorsäure und Wachsen.

Besonders bevorzugt handelt es sich bei der gegebenenfalls eingesetzten Komponente (D) um Ester wie 2,2,4-Trimethyl-3,3-Pentandioldiisobutyrate, Glycole wie z.B. 1,2-Propandiol, Glycolether und Polyglycole wie Polyethylenglycole, Polypropylenglycole und Polyethylenglycol-polypropylenglycol-copolymere, z.B. die bei der Herstellung der Komponente (A) im Überschuss eingesetzten Polyether.

Die in den erfindungsgemäßen Zusammensetzungen gegebenenfalls eingesetzten Komponenten (C) und (D) können auf der einen Seite zum Einstellen einer bequem handhabbaren Viskosität dienen, auf der anderen Seite gezielt auf eine bestimmte Anwendung angepasst werden. So kann z.B. durch die gezielte Auswahl der Komponenten (C) und (D) die erfindungsgemäße Entschäumerformulierung an das Tensidsystem, das entschäumt werden soll, angepasst werden.

Die organischen Verbindungen (D) können in den erfindungsgemäßen Zusammensetzungen vorzugsweise in Mengen von 0 bis 60 Gew.-%, besonders bevorzugt 5 bis 40 Gew.-%, jeweils bezogen auf das Gesamtgewicht der Zusammensetzung, eingesetzt werden. Die erfindungsgemäßen Zusammensetzungen enthalten bevorzugt Komponente (D).

Die erfindungsgemäßen Formulierungen können Wasser (E) enthalten. Beispiele für Wasser (E) sind natürliche Wässer, wie z.B. Regenwasser, Grundwasser, Quellwasser, Flusswasser und Meerwasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer.

Wasser (E) kann in den erfindungsgemäßen Zusammensetzungen vorzugsweise in Mengen von 0 bis 60 Gew.-%, besonders bevorzugt 0 bis 10 Gew.-%, jeweils bezogen auf das Gesamtgewicht der Zusammensetzung, eingesetzt werden. Die erfindungsgemäßen Zusammensetzungen enthalten bevorzugt keine Komponente (E).

Bei den gegebenenfalls eingesetzten Additiven (F) kann es sich um alle bekannten Additive handeln, die auch bisher in Organopolysiloxanzusammensetzungen eingesetzt werden können.

Bei den Additiven (F) handelt es sich bevorzugt um solche, ausgewählt aus organischen, verdickend wirkenden Polymeren, Konservierungsmitteln, Farbstoffen und Duftstoffen.

Falls in den erfindungsgemäßen Zusammensetzungen Additive (F) eingesetzt werden, handelt es sich um Mengen von vorzugsweise 0,01 bis 5,0 Gew.-%, besonders bevorzugt 0,05 bis 2,0 Gew.-%, jeweils bezogen auf das Gesamtgewicht der Zusammensetzung. Die erfindungsgemäßen Zusammensetzungen enthalten bevorzugt keine Komponente (F).

Die erfindungsgemäßen Zusammensetzungen bestehen besonders bevorzugt aus
(A) 10 bis 98 Gew.-% Polysiloxancopolymere,
(B) 0,1 bis 20 Gew.-% Organopolysiloxanharze,
(C) 0 bis 60 Gew.-% polyethermodifizierte Siloxane, die von (A) verschieden sind,
(D) 0 bis 60 Gew.-% organische siliziumfreie Verbindungen,
(E) 0 bis 60 Gew.-% Wasser und
(F) 0 bis 5,0 Gew.-% Additive,
jeweils bezogen auf das Gesamtgewicht der Zusammensetzungen.

Die erfindungsgemäßen Zusammensetzungen bestehen insbesondere aus
(A) 30 bis 90 Gew.-% Polysiloxancopolymere,
(B) 1 bis 10 Gew.-% Organopolysiloxanharze,
(C) 0 bis 40 Gew.-% polyethermodifizierte Siloxane, die von (A) verschieden sind,
(D) 5 bis 40 Gew.-% organische siliziumfreie Verbindungen,
(E) 0 bis 10 Gew.-% Wasser und
(F) 0 bis 2,0 Gew.-% Additive,
jeweils bezogen auf das Gesamtgewicht der Zusammensetzungen.

Die erfindungsgemäßen Zusammensetzungen sind bevorzugt viskose klare bis opake farblose bis bräunliche Flüssigkeiten.

Die erfindungsgemäßen Zusammensetzungen haben eine Viskosität von vorzugsweise 100 bis 2 000 000 mm²/s, besonders bevorzugt von 500 bis 50 000 mm²/s, insbesondere von 1 000 bis 20 000 mm²/s, jeweils bei 25°C.

Bei den erfindungsgemäßen Zusammensetzungen kann es sich um Lösungen oder Dispersionen handeln.

Das Herstellen der erfindungsgemäßen Zusammensetzungen kann nach bekannten Verfahren, wie z.B. durch Mischen aller Komponenten, erfolgen, wie z.B. durch einfaches Rühren mit statischen Mischern oder auch unter Anwendung von hohen Scherkräften in Kolloidmühlen, Dissolvern und Rotor-Stator-Homogenisatoren.

Ein weiterer Gegenstand der vorliegenden Erfindung sind flüssige Netz-, Wasch- und Reinigungsmittel enthaltend die erfindungsgemäßen Zusammensetzungen.

Die erfindungsgemäßen Zusammensetzungen können überall eingesetzt werden, wo Zusammensetzungen auf der Basis von Organosiliciumverbindungen auch bisher eingesetzt wurden. Insbesondere können sie als Entschäumer eingesetzt werden.

Ein weiterer Gegenstand der vorliegenden Erfindung ist ein Verfahren zum Entschäumen und/oder Schaumverhinderung von Medien, dadurch gekennzeichnet, dass die erfindungsgemäße Zusammensetzung mit dem Medium vermischt wird.

Der Zusatz der erfindungsgemäßen Zusammensetzung zu den schäumenden Medien kann direkt erfolgen, in geeigneten Lösungsmitteln, wie Toluol, Xylol, Methylethylketon oder t-Butanol, gelöst, als Pulver oder als Emulsion. Die zur Erzielung der gewünschten Entschäumerwirkung notwendige Menge richtet sich z.B. nach der Art des Mediums, der Temperatur und der auftretenden Turbulenz.

Vorzugsweise werden die erfindungsgemäßen Zusammensetzungen direkt mit konzentrierten flüssigen Tensidfomulierungen vermischt. Somit wird die Schaumbildung der daraus durch Verdünnen hergestellten Flotte verhindert.

Bevorzugt werden die erfindungsgemäßen Zusammensetzungen in Mengen von 0,1 Gew.-ppm bis 1 Gew.-%, insbesondere in Mengen von 1 bis 100 Gew.-ppm, zum anwendungsfertigen schäumenden Medium zugegeben. In konzentrierten Tensidformulierungen können die erfindungsgemäßen Zusammensetzungen zu 0,1 bis 20 Gew.-%, insbesondere zu 0,5 bis 5 Gew.-%, enthalten sein.

Das erfindungsgemäße Verfahren wird bei Temperaturen von bevorzugt -10 bis +150°C, besonders bevorzugt 5 bis 100°C, und dem Druck der umgebenden Atmosphäre, also etwa 900 bis 1100 hPa, durchgeführt. Das erfindungsgemäße Verfahren kann auch bei höheren oder niedrigeren Drücken durchgeführt werden, wie etwa bei 3000 bis 4000 hPa oder 1 bis 10 hPa.

Die erfindungsgemäßen Entschäumerzusammensetzungen können überall dort eingesetzt werden, wo störender Schaum unterdrückt werden soll. Das ist z.B. in nichtwässrigen Systemen wie bei der Teerdestillation oder der Erdölverarbeitung der Fall. Insbesondere eigenen sich die erfindungsgemäßen Entschäumerzusammensetzungen zur Bekämpfung von Schaum in wässrigen Tensidsystemen, die Anwendung in Wasch- und Reinigungsmitteln, die Bekämpfung von Schaum in Abwasseranlagen, bei Textilfärbeverfahren, bei der Erdgaswäsche, in Polymerdispersionen, und sind zum Entschäumen von bei der Zellstoffherstellung anfallenden wässrigen Medien einsetzbar.

Die erfindungsgemäßen Zusammensetzungen haben den Vorteil, dass sie als Entschäumer leicht handhabbar sind, mit konzentrierten Tensidformulierungen mischbar sind, und dass sie sich durch eine hohe, lang anhaltende Wirksamkeit in unterschiedlichsten Medien bei geringen Zusatzmengen auszeichnen. Das ist sowohl ökonomisch als auch ökologisch außerordentlich vorteilhaft.

Das erfindungsgemäße Verfahren hat den Vorteil, dass es einfach in der Durchführung und sehr wirtschaftlich ist.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben beziehen sich auf eine Temperatur von 25°C.

### Prüfungen der Verträglichkeit

Zur Prüfung der Entschäumerwirksamkeit werden zu verschiedenen flüssigen Tensidformuierungen je 2% der Entschäumerformulierungen gegeben. Nach 14 Tagen wird die Verträglichkeit visuell nach folgender Skala beurteilt: + = verträglich, o = geringe Abscheidungen, - = unverträglich.
Produkte, die verträglich waren oder nur geringe Abscheidungen zeigten, wurden auf ihre Wirksamkeit überprüft.

### Prüfungen der Entschäumerwirksamkeit

Zur Prüfung der Wirksamkeit wurde eine 0,1 Gew.-%ige Lösung der entschäumerhaltigen Tensidformulierung in einem temperierten Becherglas im Kreislauf gepumpt, so dass die umgepumpte Tensidlösung aus 10 cm Höhe auf die Oberfläche der Tensidlösung fiel. Dabei wurde der Schaumanstieg über einen Zeitraum von 60 min kontinuierlich beobachtet. Die Temperatur und Umpumpgeschwindigkeit sind den jeweiligen Einzelbeispielen zu entnehmen.

### Tensidformulierungen

Formulierung 1: Eine wässrige Formulierung enthaltend 10 Gew.-% Dodecylbenzolsulfonsäure (erhältlich unter der Bezeichnung "Marlon AS3-Säure" bei der Sasol Germany GmbH, Deutschland), 7 Gew.-% Triethanolamin und 10 Gew.-% ethoxylierten Tridecyclalkohol mit 10 Ethylenglycoleinheiten (erhältlich unter der Bezeichnung "Lutensol TO 109" bei der BASF SE, Deutschland).

Formulierung 2: ein Gemisch aus Fettalkoholethoxylaten mit einer Dichte von 1,0108 und einem Wirkstoffgehalt von 40 Gew.-%.

Formulierung 3: ein Gemisch aus ionischen Tensiden auf der Basis von Fettsäurealkanolamiden mit einer Dichte von 1,0059 und einem Wirkstoffgehalt von 36 Gew.-%.

Formulierung 4: Gemisch aus Alkansulfonaten und Fettalkoholethoxylaten mit einer Dichte von 1,0131 und einem Wirkstoffgehalt von 18 Gew.-%.

### Herstellung der Komponente (A)

### Herstellung des Polysiloxancopolymers (Polymer A1):

67 g eines mit Methylgruppen terminierten Siloxans aus Dimethylsiloxy- und Hydrogenmethylsiloxyeinheiten mit einem Aktivwasserstoffgehalt von 0,133 % und einer Viskosität von 72 mm²/s (25°C) werden unter kräftigem Rühren mit 408 g eines Allylpolyethers (560 ppm H₂O-Gehalt mit einem PO/EO-Verhältnis von 4,0 und einer Jodzahl von 11,2 vermischt und auf 100°C erwärmt. Durch Zugabe von 0,5 ml einer 2 %-igen Lösung von Hexachloroplatinsäure in Isopropanol wird die Hydrosilylierung gestartet, was sich in einer schwach exothermen Reaktion zeigt. Das Reaktionsgemisch wird bei 100 bis 110°C gehalten, bis ein klares Copolymer erhalten wird und kein Aktivwasserstoff mehr nachweisbar ist. Das Zwischenprodukt hat eine Viskosität von 870 mm²/s (25°C).

Man erwärmt weiter auf 130°C und entfernt Wasserspuren bei 1 hPa. Danach werden 7 g Hexamethylendiisocyanat eindosiert und 20 Minuten lang homogenisiert. Die Isocyanatreaktion wird mit einem Tropfen Dibutylzinnlaurat (DBTL) gestartet. Nach 2 Stunden ist der NCO-Gehalt unter die Nachweisgrenze (IR: 20 ppm) gesunken, so dass 120 g eines Tensides (käuflich erhältlich unter der Bezeichnung Emulan® HE 50 bei der BASF SE, D-Ludwigshafen) eindosiert werden. Die 80 %-ige Copolymerlösung hat nach dem Abkühlen auf 25°C eine Viskosität von 2100 mm²/s und einen Urethangehalt von 0,139 mEqu./g.

### Herstellung des Polysiloxancopolymers (Polymer A2):

Die Herstellung erfolgt nach der für Polymer A1 beschriebenen Arbeitsweise, mit der Abänderung, dass anstelle des Tensides (Emulan HE 50) 120 g des Zwischenprodukts mit der Viskosität von 870 mm²/s zum Verdünnen des hochviskosen Siloxans eingesetzt wurden. Die Viskosität betrug 4090 mm²/s,

### Herstellung des Polysiloxancopolymers (Polymer A3):

Die Herstellung erfolgt nach der für Polymer A1 beschriebenen Arbeitsweise, mit der Abänderung, dass kein Tensid (Emulan HE 50) eingesetzt wurde. Die Viskosität betrug mehr als 100000 mm²/s (25°C, keine Scherung).

Als Komponente (B) wurde ein in Benzol lösliches bei Raumtemperatur festes Siliconharz bestehend aus (nach ²⁹Si-NMR und IR-Analyse) 40 mol-% CH₃SiO_{1/2}-, 50 mol-% SiO_{4/2}-, 8 mol-% C₂H₅OSiO_{3/2}- und 2 mol-% HOSiO_{3/2}-Einheiten mit einer gewichtsmittleren Molmasse von 7900 g/mol (bezogen auf Polystyrolstandard) eingesetzt.

Als Komponente (C) wurde das bei der Herstellung des Polymers A1 erhaltene Zwischenprodukt mit der Viskosität von 870 mm²/s eingesetzt.

### Als Komponente (D) wurde eingesetzt:

D1: Ein Kohlenwasserstoffgemisch mit einem Siedebereich von 235-270°C (käuflich erhältlich unter der Bezeichnung Exxsol D 100 S bei Staub & Co, D-Nürnberg);

D2: Ein Polypropylenglycol mit einer Viskosität von ca. 100 mm²/s (erhältlich unter dem Namen PPG 400 bei F.B. Silbermann GmbH&Co KG, D-Gablingen);

D3: Ein Polypropylenglycol mit einer Viskosität von ca. 440 mm²/s (erhältlich unter dem Namen Pluriol P 2000 bei der BASF SE, D-Ludwigshafen);

D4: 1,2 Propandiol (erhältlich bei Sigma-Aldrich Chemie GmbH, D-Steinheim).

D5: 2,2,4-Trimethyl-3,3-Pentandioldiisobutyrate (erhältlich unter der Bezeichnung Eastman TXIB bei Sigma-Aldrich Chemie GmbH, D-Steinheim).

### Beispiele 1 bis 8 (B1 bis B8)

Die Herstellung der einzelnen Entschäumerformulierungen 1 bis 8 erfolgte durch einfaches Vermischen aller der in Tabelle 1 angegebenen Komponenten mit einer Dissolverscheibe.

Die erhaltenen Zusammensetzungen sind klare viskose leicht gelbliche Flüssigkeiten mit den in Tabelle 1 angegebenen Viskositäten.

**Tabelle 1**

| Beispiel | Komponente (A) | Komponente (B) | Komponente (C) | Komponente (D) | Viskosität in mm²/s |
|---|---|---|---|---|---|
| B1 | 90% A1 | 5% B | - | 5% D1 | 3140 |
| B2 | 80% A1 | 10% B | - | 10% D1 | 2750 |
| B3 | 95% A2 | 2,5% B | - | 2,5% D1 | 751 |
| B4 | 45% A3 | 2,5% B | - | 2,5% D1, 50% D3 | 2200 |
| B5 | 45% A3 | 2,5% B | - | 2,5% D1, 50% D2 | 918 |
| B6 | 45% A3 | 2,5% B | - | 2,5% D1, 50% D4 | 258 |
| B7 | 45% A3 | 2,5% B | 50% C | 2,5% D1 | 2440 |
| B8 | 45% A3 | 2,5% B | - | 2,5% D1, 50% D5 | 348 |

Die Entschäumerwirkung der so hergestellten Formulierungen wird anhand von Tensidformulierungen getestet und die Ergebnisse in den Tabellen 2 bis 5 zusammengefasst.

### Vergleichsbeispiele V1 und V2

Die Herstellung der einzelnen Entschäumerformulierungen erfolgte durch einfaches Vermischen aller unten angegebenen Komponenten mit einer Dissolverscheibe.

V1: 42,5 Teile eines linearen Polyethersiloxans der Formel M₂D₇₀D^{G}₅; G= C₃H₆O(PO)₂₅ (EO)₂₅H), 2,5 Teile Siliconharz B, 2,5 Teile Komponenten D1, 2,5 Teile einer pyrogenen hydrophobierten Kieselsäure mit einer BET-Oberfläche von 200 m²/g und einem Kohlenstoffgehalt von 2,8% erhältlich unter dem Handelsnamen HDK^{®} H2000 bei der Wacker Chemie AG, D-München und 50 Teile D2 werden homogen vermischt.

V2: Ein Entschäumer entsprechend Beispiel C11 von DE102005025450.

Die Entschäumerwirkung der so hergestellten Formulierungen wird anhand von Tensidformulierungen getestet und die Ergebnisse in den Tabellen 2 bis 5 zusammengefasst.

**Tabelle 2**

| **Ergebnisse Prüfung der Entschäumer in der Tensidformulierung 1** | | | |
|---|---|---|---|
| Beispiel | Verträglichkeit | Schaumhöhe nach 60 min bei 50°C und 85 1/h | Schaumhöhe nach 60 min bei 80°C und 85 1/h |
| Ohne | + | 80 mm | 60 mm |
| B1 | + | 60 mm | 53 mm |
| B2 | + | 56 mm | 50 mm |
| B4 | + | 56 mm | 43 mm |
| B7 | + | 56 mm | 38 mm |
| V1 | + | 75 mm | 55 mm |
| V2 | - | - | - |

**Tabelle 3**

| **Ergebnisse Prüfung der Entschäumer in der Tensidformulierung 2** | | |
|---|---|---|
| Beispiel | Verträglichkeit | Maximale Schaumhöhe bei 50°C und 80 1/h |
| ohne | + | 55 mm |
| B1 | + | 20 mm |
| B2 | O | 20 mm |

| Beispiel | Verträglichkeit | Maximale Schaumhöhe bei 50°C und 80 1/h |
|---|---|---|
| B3 | O | 33 mm |
| B5 | O | 33 mm |
| B6 | O | 33 mm |
| B7 | O | 18 mm |
| V1 | O | 54 mm |
| V2 | - | - |

**Tabelle 4**

| **Ergebnisse Prüfung der Entschäumer in der Tensidformulierung 3** | | |
|---|---|---|
| Beispiel | Verträglichkeit | Maximale Schaumhöhe bei 50°C und 80 1/h |
| ohne | + | 55 mm |
| B1 | O | 41 mm |
| B2 | O | 15 mm |
| B3 | O | 30 mm |
| B4 | + | 38 mm |
| B6 | O | 41 mm |
| B8 | O | 38 mm |
| V1 | O | 53 mm |
| V2 | - | - |

**Tabelle 5**

| **Ergebnisse Prüfung der Entschäumer in der Tensidformulierung 4** | | |
|---|---|---|
| Beispiel | Verträglichkeit | Maximale Schaumhöhe bei 80°C und 80 1/h |
| Ohne | + | 78 mm |
| B4 | + | 51 mm |
| B5 | O | 56 mm |
| B6 | + | 53 mm |
| B7 | + | 33 mm |
| V1 | O | 54 mm |
| V2 | - | - |

## Patentansprüche

1. Zusammensetzungen enthaltend
(A) Polysiloxancopolymere herstellbar indem
in einem 1, Schritt
Organopolysiloxane (1), die pro Molekül mindestens ein Si-gebundenes Wasserstoffatom aufweisen, mit weitgehend linearen oligomeren oder polymeren Verbindungen (2) der allgemeinen Formel
R¹-(A-CₙH₂ₙ)ₘ-A¹-H (I),
wobei R¹ einen einwertigen, gegebenenfalls substituierten Kohlenwasserstoffrest bedeutet, an den Si-H-Gruppen in einer Hydrosilylierungsreaktion angelagert werden können,
A einen zweiwertigen, polaren organischen Rest ausgewählt aus der Gruppe von -O-, -C(O)-O-, -O-C(O)-, -O-C(O)-O-, -C(O)-NH-, -NH-C(O)-, Urethanrest und Harnstoffrest bedeutet,
A¹ einen zweiwertigen, polaren organischen Rest ausgewählt aus der Gruppe von -O-, -NH- und -NR'-, wobei R' ein einwertiger Kohlenwasserstoffrest mit 1 bis 18 Kohlenstoffatomen ist, bedeutet,
n eine ganze Zahl von 1 bis 20 ist und
m eine ganze Zahl ist,
umgesetzt werden,
mit der Maßgabe, dass die m Einheiten (A-CₙH₂ₙ) gleich oder verschieden sein können,
und in einem 2. Schritt
die so erhaltenen H-A¹-Gruppen aufweisenden Zwischenprodukte (4) mit organischen Verbindungen (5), die pro Molekül mindestens zwei Isocyanatgruppen aufweisen, sowie gegebenenfalls weiteren Verbindungen (7) umgesetzt werden,
(B) Organopolysiloxanharze aus Einheiten der Formel
R⁸₉ (R⁹O)ₕSiO₍₄₋₉₋ₕ₎/2 (VI),
worin
R⁸ gleich oder verschieden sein kann und Wasserstoffatom oder einen einwertigen, gegebenenfalls substituierten, SiC-gebundenen Kohlenwasserstoffrest bedeutet,
R⁹ gleich oder verschieden sein kann und ein Wasserstoffatom oder einen einwertigen, gegebenenfalls substituierten Kohlenwasserstoffrest bedeutet,
g 0, 1, 2 oder 3 ist und
h 0, 1, 2 oder 3 ist,
mit der Maßgabe, dass die Summe g+h≤3 ist und in weniger als 50 % aller Einheiten der Formel (VI) im Organopolysiloxanharz die Summe g+h gleich 2 ist,
gegebenenfalls
(C) polyethermodifizierte Siloxane, die von (A) verschieden sind,
gegebenenfalls
(D) organische Verbindungen,
gegebenenfalls
(E) Wasser und
gegebenenfalls
(F) Additive,
mit der Maßgabe, dass diese Zusammensetzungen keine Polyorganosiloxane enthalten, bei denen mehr als 90% der Einheiten difunktionelle Einheiten der Formel SiR"₂O_{2/2} sind mit R" gleich Kohlenwasserstoffrest.

2. Zusammensetzungen gemäß Anspruch 1, **dadurch gekennzeichnet, dass** sie frei von hochdisperser Kieselsäure sind.

3. Zusammensetzungen gemäß Anspruch 1 oder 2, **dadurch gekennzeichnet, dass** es sich um solche handelt, bestehend aus
(A) Polysiloxancopolymeren herstellbar indem
in einem 1, Schritt
Organopolysiloxane (1), die pro Molekül mindestens ein Si-gebundenes Wasserstoffatom aufweisen, mit weitgehend linearen oligomeren oder polymeren Verbindungen (2) der allgemeinen Formel
R¹-(A-CₙH₂ₙ)ₘ-A¹-H (I),
wobei R¹ einen einwertigen, gegebenenfalls substituierten Kohlenwasserstoffrest bedeutet, an den Si-H-Gruppen in einer Hydrosilylierungsreaktion angelagert werden können,
A einen zweiwertigen, polaren organischen Rest ausgewählt aus der Gruppe von -O-, -C(O)-O-, -O-C(O)-, -O-C(O)-O-, -C(O)-NH-, -NH-C(O)-, Urethanrest und Harnstoffrest bedeutet,
A¹ einen zweiwertigen, polaren organischen Rest ausgewählt aus der Gruppe von -O-, -NH- und -NR'-, wobei R' ein einwertiger Kohlenwasserstoffrest mit 1 bis 18 Kohlenstoffatomen ist, bedeutet,
n eine ganze Zahl von 1 bis 20 ist und
m eine ganze Zahl ist,
umgesetzt werden,
mit der Maßgabe, dass die m Einheiten (A-CₙH₂ₙ) gleich oder verschieden sein können,
und in einem 2. Schritt
die so erhaltenen H-A¹-Gruppen aufweisenden Zwischenprodukte (4) mit organischen Verbindungen (5), die pro Molekül mindestens zwei Isocyanatgruppen aufweisen, sowie gegebenenfalls weiteren Verbindungen (7) umgesetzt werden,
(B) Organopolysiloxanharzen aus Einheiten der Formel
R⁸_{g}(R⁹O)ₕSiO_{(4-g-h)/2} (VI),
worin
R⁸ gleich oder verschieden sein kann und Wasserstoffatom oder einen einwertigen, gegebenenfalls substituierten, SiC-gebundenen Kohlenwasserstoffrest bedeutet,
R⁹ gleich oder verschieden sein kann und ein Wasserstoffatom oder einen einwertigen, gegebenenfalls substituierten Kohlenwasserstoffrest bedeutet,
g 0, 1, 2 oder 3 ist und
h 0, 1, 2 oder 3 ist,
mit der Maßgabe, dass die Summe g+h≤3 ist und in weniger als 50 % aller Einheiten der Formel (VI) im Organopolysiloxanharz die Summe g+h gleich 2 ist,
gegebenenfalls
(C) polyethermodifizierten Siloxanen, die von (A) verschieden sind,
gegebenenfalls
(D) organischen Verbindungen,
gegebenenfalls
(E) Wasser und
gegebenenfalls
(F) Additiven.

4. Zusammensetzungen gemäß einem oder mehreren der Ansprüche 1 bis 3, **dadurch gekennzeichnet, dass** als Organopolysiloxane (1) vorzugsweise lineare, cyclische oder verzweigte Organopolysiloxane aus Einheiten der allgemeinen Formel
RₑH_{f}SiO_{(4-e-f)/2} (II)
verwendet werden, wobei
R gleich oder verschieden sein kann und einen einwertigen, gegebenenfalls substituierten Kohlenwasserstoffrest mit 1 bis 18 Kohlenstoffatomen je Rest bedeutet,
e 0, 1, 2 oder 3 ist und
f 0, 1 oder 2 ist,
mit der Maßgabe, dass die Summe e+f 0, 1, 2 oder 3 ist und pro Molekül mindestens ein Si-gebundenes Wasserstoffatom, bevorzugt mindestens 2 Si-gebundene Wasserstoffatome, vorliegen.

5. Zusammensetzungen gemäß einem oder mehreren der Ansprüche 1 bis 4, **dadurch gekennzeichnet, dass** die weiteren Verbindungen (7) solche sind ausgewählt aus der Gruppe der Formeln
R⁴-(A-CₙH₂ₙ)ₘ₋A¹-H (VII),
HO-R⁵-NR⁴-R⁵-OH (VIII),
HO-R⁵-NR⁴₂ (IX),
HO-R⁶ (NR⁴₂)₂ (X),
HO-R⁷ (NR⁴₂)₃ (XI),
(HO)₂R⁶-NR⁴₂ (XII)
und
HNR⁴₂ (XIII),
wobei R⁴ ein Wasserstoffatom oder einen Rest R, der ein oder mehrere Stickstoffatome enthalten kann, bedeutet,
R⁵ gleich oder verschieden sein kann und einen zweiwertigen Kohlenwasserstoffrest mit 1 bis 10 Kohlenstoffatomen je Rest bedeutet,
R⁶ einen dreiwertigen organischen Rest mit 1 bis 100 Kohlenstoffatomen je Rest, der ein oder mehrere Sauerstoffatome enthält, bedeutet
R⁷ einen vierwertigen organischen Rest mit 1 bis 100 Kohlenstoffatomen je Rest, der ein oder mehrere Sauerstoffatome enthält, bedeutet, und
A¹, n und m eine der oben dafür angegebenen Bedeutungen haben.

6. Zusammensetzungen gemäß einem oder mehreren der Ansprüche 1 bis 5, **dadurch gekennzeichnet, dass** es sich um solche handelt bestehend aus
(A) 10 bis 98 Gew.-% Polysiloxancopolymeren,
(B) 0,1 bis 20 Gew.-% Organopolysiloxanharzen,
(C) 0 bis 60 Gew.-% polyethermodifizierten Siloxanen, die von (A) verschieden sind,
(D) 0 bis 60 Gew.-% organische siliziumfreien Verbindungen,
(E) 0 bis 60 Gew.-% Wasser und
(F) 0 bis 5,0 Gew.-% Additiven,
jeweils bezogen auf das Gesamtgewicht der Zusammensetzungen,

7. Zusammensetzungen gemäß einem oder mehreren der Ansprüche 1 bis 6, **dadurch gekennzeichnet, dass** es sich um solche handelt bestehend aus
(A) 30 bis 90 Gew.-% Polysiloxancopolymeren,
(B) 1 bis 10 Gew.-% Organopolysiloxanharzen,
(C) 0 bis 40 Gew.-% polyethermodifizierten Siloxanen, die von (A) verschieden sind,
(D) 5 bis 40 Gew.-% organischen siliziumfreien Verbindungen,
(E) 0 bis 10 Gew.-% Wasser und
(F) 0 bis 2,0 Ges.-% Additiven,
jeweils bezogen auf das Gesamtgewicht der Zusammensetzungen.

8. Flüssige Netz-, Wasch- und Reinigungsmittel enthaltend die Zusammensetzungen gemäß einem oder mehreren der Ansprüche 1 bis 7.

9. Verfahren zum Entschäumen und/oder Schaumverhinderung von Medien, **dadurch gekennzeichnet, dass** die Zusammensetzungen gemäß einem oder mehreren der Ansprüche 1 bis 7 mit dem Medium vermischt werden.

10. Verfahren nach Anspruch 9, **dadurch gekennzeichnet, dass** die Zusammensetzungen in Mengen von 0,1 Gew.-ppm bis 1 Gew.-% zum anwendungsfertigen schäumenden Medium zugegeben werden.

## Claims

1. Compositions comprising
(A) polysiloxane copolymers preparable by reacting
in a 1st step
organopolysiloxanes (1) which have per molecule at least one Si-bonded hydrogen atom with largely linear oligomeric or polymeric compounds (2) of the general formula
R¹-(A- CₙH₂ₙ) ₘ-A¹-H (I),
where R¹ is a monovalent, optionally substituted hydrocarbon radical to which Si-H groups can be added in a hydrosilylation reaction,
A is a divalent, polar organic radical selected from the group of -O-, -C(O)-O-, -O-C(O)-, -O-C(O)-O-, -C(O)-NH-, -NH-C(O)-, urethane radical and urea radical,
A¹ is a divalent, polar organic radical selected from the group of -O-, -NH- and -NR'-, where R' is a monovalent hydrocarbon radical having 1 to 18 carbon atoms,
n is an integer from 1 to 20, and
m is an integer,
with the proviso that the m units (A-CₙH₂ₙ) may be identical or different,
and reacting
in a 2nd step
the resultant intermediates (4), containing H-A¹ groups, with organic compounds (5) which have per molecule at least two isocyanate groups, and also, optionally, further compounds (7),
(B) organopolysiloxane resins comprising units of the formula
R⁸_{g}(R⁹O)ₕSiO_{(4-g-h)/2} (VI)
in which
R⁸ may be identical or different and denotes hydrogen atom or a monovalent, optionally substituted, SiC-bonded hydrocarbon radical,
R⁹ may be identical or different and denotes a hydrogen atom or a monovalent, optionally substituted hydrocarbon radical,
g is 0, 1, 2 or 3, and
h is 0, 1, 2 or 3,
with the proviso that the sum g+h ≤ 3 and in less than 50% of all of the units of the formula (VI) in the organopolysiloxane resin the sum g+h is 2, optionally
(C) polyether-modified siloxanes different from (A),
optionally
(D) organic compounds,
optionally
(E) water, and
optionally
(F) additives,
with the proviso that said compositions do not comprise polyorganosiloxanes in which more than 90% of the units are difunctional units of the formula SiR''₂O_{2/2} where R" is a hydrocarbon radical.

2. Compositions according to Claim 1, **characterized in that** they are free from highly disperse silica.

3. Compositions according to Claim 1 or 2, **characterized in that** they are compositions composed of
(A) polysiloxane copolymers preparable by reacting
in a 1st step
organopolysiloxanes (1) which have per molecule at least one Si-bonded hydrogen atom with largely linear oligomeric or polymeric compounds (2) of the general formula
R¹-(A-CₙH₂ₙ)ₘ-A¹-H (I),
where R¹ is a monovalent, optionally substituted hydrocarbon radical to which Si-H groups can be added in a hydrosilylation reaction,
A is a divalent, polar organic radical selected from the group of -O-, -C(O)-O-, -O-C(O)-, -O-C(O)-O-, -C(O)-NH-, -NH-C(O)-, urethane radical and urea radical,
A¹ is a divalent, polar organic radical selected from the group of -O-, -NH- and -NR'-, where R' is a monovalent hydrocarbon radical having 1 to 18 carbon atoms,
n is an integer from 1 to 20, and
m is an integer,
with the proviso that the m units (A-CₙH₂ₙ) may be identical or different,
and reacting
in a 2nd step
the resultant intermediates (4), containing H-A¹ groups, with organic compounds (5) which have per molecule at least two isocyanate groups, and also, optionally, further compounds (7),
(B) organopolysiloxane resins comprising units of the formula
R⁸_{g}(R⁹O)ₕSiO_{(4-g-h)/2} (VI),
in which
R⁸ may be identical or different and denotes hydrogen atom or a monovalent, optionally substituted, SiC-bonded hydrocarbon radical,
R⁹ may be identical or different and denotes a hydrogen atom or a monovalent, optionally substituted hydrocarbon radical,
g is 0, 1, 2 or 3, and
h is 0, 1, 2 or 3,
with the proviso that the sum g+h ≤ 3 and in less than 50% of all of the units of the formula (VI) in the organopolysiloxane resin the sum g+h is 2, optionally
(C) polyether-modified siloxanes different from (A),
optionally
(D) organic compounds,
optionally
(E) water, and
optionally
(F) additives.

4. Compositions according to one or more of Claims 1 to 3, **characterized in that** organopolysiloxanes (1) used are preferably linear, cyclic or branched organopolysiloxanes comprising units of the general formula
RₑH_{f}SiO_{(4-e-f)/2} (II)
where
R may be identical or different and denotes a monovalent, optionally substituted hydrocarbon radical having 1 to 18 carbon atoms per radical,
e is 0, 1, 2 or 3, and
f is 0, 1 or 2,
with the proviso that the sum e+f is 0, 1, 2 or 3 and per molecule there is at least one Si-bonded hydrogen atom, preferably at least 2 Si-bonded hydrogen atoms.

5. Compositions according to one or more of Claims 1 to 4, **characterized in that** the further compounds (7) are compounds selected from the group of the formulae
R⁴-(A-CₙH₂ₙ) ₘ-A¹-H (VII),
HO-R⁵-NR⁴-R⁵-OH (VIII),
HO-R⁵-NR⁴₂ (IX),
HO-R⁶ (NR⁴₂)₂ (X),
HO-R⁷(NR⁴₂)₃ (XI),
(HO)₂R⁶-NR⁴₂ (XII),
and
HNR⁴₂ (XIII),
where R⁴ is a hydrogen atom or a radical R, which may contain one or more nitrogen atoms,
R⁵ may be identical or different and is a divalent hydrocarbon radical having 1 to 10 carbon atoms per radical,
R⁶ is a trivalent organic radical having 1 to 100 carbon atoms per radical and containing one or more oxygen atoms,
R⁷ is a tetravalent organic radical having 1 to 100 carbon atoms per radical and containing one or more oxygen atoms, and
A¹, n, and m have one of the definitions specified for them above.

6. Compositions according to one or more of Claims 1 to 5, **characterized in that** they are compositions composed of
(A) 10% to 98% by weight of polysiloxane copolymers,
(B) 0.1% to 20% by weight of organopolysiloxane resins,
(C) 0% to 60% by weight of polyether-modified siloxanes which are different from (A),
(D) 0% to 60% by weight of organic silicon-free compounds,
(E) 0% to 60% by weight of water, and
(F) 0% to 5.0% by weight of additives,
based in each case on the total weight of the compositions.

7. Compositions according to one or more of Claims 1 to 6, **characterized in that** they are compositions composed of
(A) 30% to 90% by weight of polysiloxane copolymers,
(B) 1% to 10% by weight of organopolysiloxane resins,
(C) 0% to 40% by weight of polyether-modified siloxanes which are different from (A),
(D) 5% to 40% by weight of organic silicon-free compounds,
(E) 0% to 10% by weight of water, and
(F) 0% to 2.0% by weight of additives,
based in each case on the total weight of the compositions.

8. Liquid wetting, detergent and cleaning materials comprising the compositions according to one or more of Claims 1 to 7.

9. Method for defoaming and/or foam prevention in media, **characterized in that** the compositions according to one or more of Claims 1 to 7 are mixed with the medium.

10. Method according to Claim 9, **characterized in that** the compositions are added in amounts of 0.1 ppm by weight to 1% by weight to the ready-to-use foaming medium.

## Revendications

1. Compositions contenant
(A) des copolymères de polysiloxane pouvant être fabriqués par
lors d'une étape 1
la mise en réaction d'organopolysiloxanes (1), qui comprennent au moins un atome d'hydrogène relié à Si par molécule, avec des composés oligomères ou polymères essentiellement linéaires (2) de formule générale
R¹-(A-CₙH₂ₙ)ₘ-A¹-H (I)
dans laquelle R¹ signifie un radical hydrocarboné monovalent éventuellement substitué, auquel des groupes Si-H peuvent être fixés par une réaction d'hydrosilylation,
A signifie un radical organique polaire bivalent choisi dans le groupe constitué par -O-, -C(O)-O-, -O-C(O)-, -O-C(O)-O-, -C(O)-NH-, -NH-C(O)-, un radical uréthane et un radical urée,
A¹ signifie un radical organique polaire bivalent choisi dans le groupe constitué par -O-, -NH- et - NR'-, R' étant un radical hydrocarboné monovalent de 1 à 18 atomes de carbone,
n est un nombre entier de 1 à 20, et
m est un nombre entier,
à condition que les m unités (A-CₙH₂ₙ) puissent être identiques ou différentes,
et, lors d'une étape 2
la mise en réaction des produits intermédiaires (4) comprenant des groupes H-A¹ ainsi obtenus avec des composés organiques (5), qui comprennent au moins deux groupes isocyanate par molécule, ainsi qu'éventuellement d'autres composés (7),
(B) des résines d'organopolysiloxane constituées d'unités de formule
R⁸_{g}(R⁹O)ₕSiO(₄-_{g}-ₕ)_{/2} (VI)
dans laquelle
R⁸ peut être identique ou différent, et signifie un atome d'hydrogène ou un radical hydrocarboné monovalent relié à SiC, éventuellement substitué, R⁹ peut être identique ou différent, et signifie un atome d'hydrogène ou un radical hydrocarboné monovalent éventuellement substitué,
g signifie 0, 1, 2 ou 3, et
h signifie 0, 1, 2 ou 3,
à condition que la somme g+h ≤ 3 et que la somme g+h soit égale à 2 dans moins de 50 % de toutes les unités de formule (VI) dans la résine d'organopolysiloxane,
éventuellement
(C) des siloxanes modifiés par des polyéthers, qui sont différents de (A),
éventuellement
(D) des composés organiques,
éventuellement
(E) de l'eau et
éventuellement
(F) des additifs,
à condition que ces compositions ne contiennent pas de polyorganosiloxanes dans lesquels plus de 90 % des unités sont des unités bifonctionnelles de formule SiR''₂O_{2/2} avec R" représentant un radical hydrocarboné.

2. Compositions selon la revendication 1, **caractérisées en ce qu'**elles sont exemptes de silice hautement dispersée.

3. Compositions selon la revendication 1 ou 2, **caractérisées en ce qu'**il s'agit de compositions constituées par
(A) des copolymères de polysiloxane pouvant être fabriqués par
lors d'une étape 1
la mise en réaction d'organopolysiloxanes (1), qui comprennent au moins un atome d'hydrogène relié à Si par molécule, avec des composés oligomères ou polymères essentiellement linéaires (2) de formule générale
R¹-(A-CₙH₂ₙ)ₘ-A¹-H (I)
dans laquelle R¹ signifie un radical hydrocarboné monovalent éventuellement substitué, auquel des groupes Si-H peuvent être fixés par une réaction d'hydrosilylation,
A signifie un radical organique polaire bivalent choisi dans le groupe constitué par -O-, -C(O)-O-, -O-C(O)-, -O-C(O)-O-, -C(O)-NH-, -NH-C(O)-, un radical uréthane et un radical urée,
A¹ signifie un radical organique polaire bivalent choisi dans le groupe constitué par -O-, -NH- et - NR'-, R' étant un radical hydrocarboné monovalent de 1 à 18 atomes de carbone,
n est un nombre entier de 1 à 20, et
m est un nombre entier,
à condition que les m unités (A-CₙH₂ₙ) puissent être identiques ou différentes,
et, lors d'une étape 2
la mise en réaction des produits intermédiaires (4) comprenant des groupes H-A¹ ainsi obtenus avec des composés organiques (5), qui comprennent au moins deux groupes isocyanate par molécule, ainsi qu'éventuellement d'autres composés (7),
(B) des résines d'organopolysiloxane constituées d'unités de formule
R⁸_{g}(R⁹O)ₕSiO_{(4-g-h)/2} (VI)
dans laquelle
R⁸ peut être identique ou différent, et signifie un atome d'hydrogène ou un radical hydrocarboné monovalent relié à SiC, éventuellement substitué, R⁹ peut être identique ou différent, et signifie un atome d'hydrogène ou un radical hydrocarboné monovalent éventuellement substitué,
g signifie 0, 1, 2 ou 3, et
h signifie 0, 1, 2 ou 3,
à condition que la somme g+h ≤ 3 et que la somme g+h soit égale à 2 dans moins de 50 % de toutes les unités de formule (VI) dans la résine d'organopolysiloxane,
éventuellement
(C) des siloxanes modifiés par des polyéthers, qui sont différents de (A),
éventuellement
(D) des composés organiques,
éventuellement
(E) de l'eau et
éventuellement
(F) des additifs.

4. Compositions selon une ou plusieurs des revendications 1 à 3, **caractérisées en ce que** des organopolysiloxanes linéaires, cycliques ou ramifiés constitués d'unités de formule générale
RₑH_{f}SiO_{(4-e-f)/2} (II)
dans laquelle
R peut être identique ou différent, et signifie un radical hydrocarboné monovalent éventuellement substitué de 1 à 18 atomes de carbone par radical,
e signifie 0, 1, 2 ou 3, et
f signifie 0, 1 ou 2,
à condition que la somme e+f soit de 0, 1, 2 ou 3 et qu'au moins un atome d'hydrogène relié à Si, de préférence au moins 2 atomes d'hydrogène reliés à Si, soient présents par molécule,
sont utilisés de préférence en tant qu'organopolysiloxanes (1).

5. Compositions selon une ou plusieurs des revendications 1 à 4, **caractérisées en ce que** les autres composés (7) sont ceux qui sont choisis dans le groupe des formules
R⁴-(A-CₙH₂ₙ₎ₘ-A¹-H (VII),
HO-R⁵-NR⁴-R⁵-OH (VIII),
HO-R⁵-NR⁴₂ (IX),
HO-R⁶(NR⁴₂)₂ (X),
HO-R⁷(NR⁴₂)₃ (XI),
(HO)₂R⁶-NR⁴₂ (XII)
et
HNR⁴₂ (XIII),
dans lesquelles R⁴ signifie un atome d'hydrogène ou un radical R, qui peut contenir un ou plusieurs atomes d'azote,
R⁵ peut être identique ou différent, et signifie un radical hydrocarboné bivalent de 1 à 10 atomes de carbone par radical,
R⁶ signifie un radical organique trivalent de 1 à 100 atomes de carbone par radical, qui contient un ou plusieurs atomes d'oxygène,
R⁷ signifie un radical organique tétravalent de 1 à 100 atomes de carbone par radical, qui contient un ou plusieurs atomes d'oxygène, et
A¹, n et m ont une des significations données précédemment pour ceux-ci.

6. Compositions selon une ou plusieurs des revendications 1 à 5, **caractérisées en ce qu'**il s'agit de compositions constituées par
(A) 10 à 98 % en poids de copolymères de polysiloxane,
(B) 0,1 à 20 % en poids de résines d'organopolysiloxane,
(C) 0 à 60 % en poids de siloxanes modifiés par des polyéthers, qui sont différents de (A),
(D) 0 à 60 % en poids de composés organiques exempts de silicium,
(E) 0 à 60 % en poids d'eau, et
(F) 0 à 5,0 % en poids d'additifs,
à chaque fois par rapport au poids total des compositions.

7. Compositions selon une ou plusieurs des revendications 1 à 6, **caractérisées en ce qu'**il s'agit de compositions constituées par
(A) 30 à 90 % en poids de copolymères de polysiloxane,
(B) 1 à 10 % en poids de résines d'organopolysiloxane,
(C) 0 à 40 % en poids de siloxanes modifiés par des polyéthers, qui sont différents de (A),
(D) 5 à 40 % en poids de composés organiques exempts de silicium,
(E) 0 à 10 % en poids d'eau, et
(F) 0 à 2,0 % en poids d'additifs,
à chaque fois par rapport au poids total des compositions.

8. Agents de mouillage, de lavage et de nettoyage liquides contenant les compositions selon une ou plusieurs des revendications 1 à 7.

9. Procédé de démoussage et/ou d'inhibition du moussage de milieux, **caractérisé en ce que** les compositions selon une ou plusieurs des revendications 1 à 7 sont mélangées avec le milieu.

10. Procédé selon la revendication 9, **caractérisé en ce que** les compositions sont ajoutées en quantités de 0,1 ppm en poids à 1 % en poids au milieu moussant prêt à l'emploi.
